# EUROPÄISCHE PATENTANMELDUNG

(11) **EP 4 454 853 A1**
(43) Veröffentlichungstag der Anmeldung: **30.10.2024**
(21) Anmeldenummer: 24171358.5
(22) Anmeldetag: 19.04.2024
(51) Int. Cl.: B29C 45/14

(54) **STRUKTURBAUTEIL**

(30) Priorität: 24.04.2023 DE 202023102167 U
(71) Anmelder: Weber Fibertech GmbH, 88677 Markdorf (DE)
(72) Erfinder: STÖTZNER, Norbert, 88677 Markdorf (DE)
(74) Vertreter: RDL Patentanwälte PartG mbB

(57) **Zusammenfassung**

Strukturbauteil, das mittels einer Fluidinjektionstechnik hergestellt ist und mindestens einen ersten Abschnitt, in dem ein Hohlprofil vorgesehen ist, und mindestens einen zweiten Abschnitt, der mit Endlosfasern verstärkt ist, aufweist.

## Beschreibung

Die Erfindung betrifft ein Strukturbauteil, insbesondere ein Strukturbauteil zum Einsatz in einem Kraftfahrzeug, bspw. in einer Fahrzeugkarosserie.

Strukturbauteile werden in vielen Gebieten eingesetzt und dienen regelmäßig dazu, mechanische Kräfte aufzunehmen und zu übertragen. Weiterhin können sie dazu dienen, andere Bauteile miteinander zu verbinden. In vielen Fällen wird versucht, ein Strukturbauteil mit hoher Steifigkeit und gleichzeitig niedrigem Gewicht bereitzustellen. Dies ist insbesondere im Bereich des Leichtbaus von Bedeutung, der sich zunehmend als vorteilhaft erweist und in vielen Bereichen der Technik immer häufiger eingesetzt wird.

Auch Fahrzeuge, insbesondere Kraftfahrzeuge, können durch Einsatz solcher Strukturbauteile leichter und stabiler gestaltet werden, ohne dass auf Komfort und Sicherheit verzichtet werden muss.

Im Fahrzeugbereich hilft der Einsatz von Strukturbauteilen u. a. dazu, CO₂-Emissionen zu verringern. In diesem Bereich werden Strukturbauteile zum Schutz von Komponenten und Baugruppen eingesetzt. So können flächige, faserverstärkte Strukturbauteile bspw. an einer Fahrzeugunterseite eingesetzt werden und dienen dann als Unterbodenschutz.

Die Druckschrift DE 10 2017 110 906 A1 beschreibt ein Strukturbauteil, das insbesondere zum Einsatz in einer Fahrzeugkarosserie eingerichtet ist. Das Strukturbauteil weist ein erstes Strukturelement auf, das einen Raumbereich zumindest teilweise umgibt, so dass im Inneren des ersten Strukturelements ein Hohlraum gebildet ist. Dieses erste Strukturelement weist einen diesen Hohlraum begrenzenden Oberflächenbereich und ein zweites Strukturelement auf.

Es ist weiterhin ein Verstärkungselement vorgesehen, das zur mechanischen Verstärkung des ersten Strukturelements dient.

Fluidinjektionstechnik (FIT) ist ein Überbegriff für Verfahren, bei denen durch die Injektion eines Fluids Hohlräume erzeugt werden. Die Fluidinjektionstechnik kann dabei mit einem Spritzgießen, einem Fließpressverfahren oder irgendeinem anderen geeigneten Verfahren kombiniert werden. FIT wird dabei insbesondere in Verbindung mit Kunststoffen, insbesondere mit Polymer-Materialien, eingesetzt. Zusätzlich zu den üblichen Konstruktionsmerkmalen von Kunststoffteilen kann diese Technik bzw. dieser Prozess dazu verwendet werden, um Hohlprofile in den Komponenten herzustellen, wobei dies mit geringen Kosten möglich ist. Aufgrund der hohlen Geometrie der Bauteile haben FIT-Komponenten eine höhere Steifigkeit, während diese gleichzeitig leicht und kosteneffizient herzustellen sind.

Verbundstrukturen mit Endlosfasern sind Materialien, bei denen Verstärkungen mit Endlosfasern mit einem Matrixwerkstoff kombiniert werden. Die Größen bzw. Eigenschaften werden kombiniert, was zu einem Werkstoff mit hoher Steifigkeit und Festigkeit entlang der Erstreckungsrichtung der Fasern führt.

Es sind Prozesse bekannt, bei denen ein Hybridformen durchgeführt wird, wobei ein Formen eines Organoblechs und ein Spritzgießen zusammen in der Spritzgießform stattfinden. Durch eine solche funktionale Integration und hinzugefügte Rippenstrukturen wird eine höhere Strukturfestigkeit erreicht.

Die aus dem Stand der Technik bekannten Verfahren und Prozesse sind mit einigen Nachteilen verbunden. So kann das FIT-Verfahren nur dazu verwendet werden, Kunststoffe bzw. Polymere mit oder ohne Partikel, Kurz- oder Langfaserverstärkung zu verarbeiten, nicht aber mit Endlosfaserverstärkung. Diese Werkstoffe haben eine geringere Steifigkeit und Festigkeit im Vergleich zu Verbundstoffen mit Endlosfasern, wenn die Bestandteile, d. h. die Verstärkung und die Matrix, dieselben sind. Obgleich das Hohlprofil die Bauteilsteifigkeit vielfach erhöht, erfährt unter der Einwirkung von mechanischen Lasten die äußerste Schicht des Werkstoffs die höchste Belastung. An dieser Stelle liegt der Schwachpunkt des Materials selbst. Im FIT-Verfahren können unverstärkte, kurzfaserverstärkte, d. h. bis 3 mm Faserlänge, oder langfaserverstärkte, d. h. ab 3 mm Faserlänge, eingesetzt werden. Eine Kombination mit Endlosfasern erfolgt bisher nicht.

Bei üblichen Hybridform-Verfahren, bei denen Verbundstoffe mit Endlosfasern, wie bspw. Organobleche, mit unverstärkten Polymeren oder Polymere mit kurzen und/oder langen Fasern kombiniert werden, kann ein Hohlprofil nicht in einem einzigen Schritt hergestellt werden. Beispiele umfassen ein Spritzgießen oder einen Formpressprozess, bei dem zusätzlich zu dem Formen von Endlosfasern strukturelle Verstärkungen, wie bspw. Rippen, Wulste usw., hinzugefügt werden, um das Leistungsvermögen der Bauteile zu steigern. Daher besteht der Schwachpunkt von Verstärkungen mit Endlosfasern in den geometrischen Eigenschaften bzw. Merkmalen, die bei tragbaren Kosten unter Verwendung dieser Materialien hergestellt werden.

Vor diesem Hintergrund wird ein Strukturbauteil mit den Merkmalen des Anspruchs 1 vorgestellt. Ausführungsformen ergeben sich aus den abhängigen Ansprüchen und aus der Beschreibung.

Das vorgestellte Strukturbauteil ist bspw. für einen Einbau bzw. Einsatz in einem Kraftfahrzeug vorgesehen. Dieses Strukturbauteil ist mittels einer Fluidinjektionstechnik hergestellt und weist mindestens einen ersten Abschnitt auf, in dem ein Hohlprofil vorgesehen ist, und mindestens einen zweiten Abschnitt, der mit Endlosfasern verstärkt ist.

Das Strukturbauteil kann derart aufgebaut sein, dass wenigstens ein erster Abschnitt und wenigstens ein zweiter Abschnitt so zueinander angeordnet sind, dass der wenigstens eine erste Abschnitt zumindest abschnittsweise von dem wenigstens einen zweiten Abschnitt umgeben ist.

Das Strukturbauteil kann bspw. als Hohlkörper ausgebildet sein, der einen inneren ausgeschnittenen Hohlraum und eine Wandung umfasst, wobei der ausgeschnittene Hohlraum das Hohlprofil definiert und die Wandung den zweiten Abschnitt mit den Endlosfasern aufweist.

Das Hohlprofil kann bspw. durch ein mit Wasser angetriebenes Projektil erzeugt sein.

Die Endlosfasern können bspw. in einem Bereich außen an der Wandung parallel und/oder diagonal zu einer Längsachse des Hohlprofils verlaufen.

Bei dem vorgestellten Strukturbauteil kann ein thermoplastischer oder duroplastischer Kunststoff mit oder ohne Verstärkung verwendet werden. Weiterhin können Endlosfasern mit oder ohne Matrixmaterial verwendet werden. Die Endlosfasern können in dem Fluidinjektionsschritt oder nach diesem Schritt eingebunden werden.

Die vorliegende Erfindung, die durch das vorgestellte Strukturbauteil verkörpert ist, betrifft somit die Verstärkung von Polymer- bzw. Kunststoffbauteilen mit Hohlprofil bzw. Hohlquerschnitt mit Endlosfasern. Der dabei verwendete Herstellungsprozess und daher die Gestaltung der herzustellenden Bauteile, wobei das genannte Verfahren verwendet wird, werden als E-FIT bezeichnet, wobei dies ein Akronym für die Bezeichnung Endless fiber composite (Endlosfaser-Verbundwerkstoff) und Fluid Injection Technology (Fluidinjektionstechnik) darstellt.

Strukturbauteile, die mit diesem E-FIT-Verfahren hergestellt werden, haben vorteilhaft sowohl aufgrund des verwendeten Verbundwerkstoffs mit Endlosfasern als auch aufgrund der geometrischen Merkmale der FIT-Bauteile ein höheres mechanisches Leistungsvermögen. Aus diesem Grunde haben E-FIT-Bauteile bzw. FIT-Komponenten eine äußerst hohe spezifische Steifigkeit und Festigkeit, was zu Gestaltungen mit geringem Gewicht bei niedrigen Kosten führt. Solche E-FIT-Bauteile können im Bereich von Automobilen, der Luftfahrt und bei Elektrofahrrädern Anwendung finden, sind aber nicht auf diese Bereiche beschränkt, sondern können vielfältig eingesetzt werden.

Es zeigt sich, dass es bei vielen Anwendungen möglich ist, durch die Kombination von Verbundstoffen, die Endlosfasern aufweisen, mit Hohlkanälen eine angestrebte Gestaltung bei geringem Gewicht zu erreichen.

Die auf diese Weise hergestellten Bauteile weisen ein höheres mechanisches Leistungsvermögen, insbesondere hinsichtlich Steifigkeit und Festigkeit, aufgrund der geometrischen Merkmale der Hohlprofile auf. Verstärkungen mit Endlosfasern weisen aufgrund des Materials bzw. des Werkstoffs selbst ein höheres mechanisches Leistungsvermögen auf.

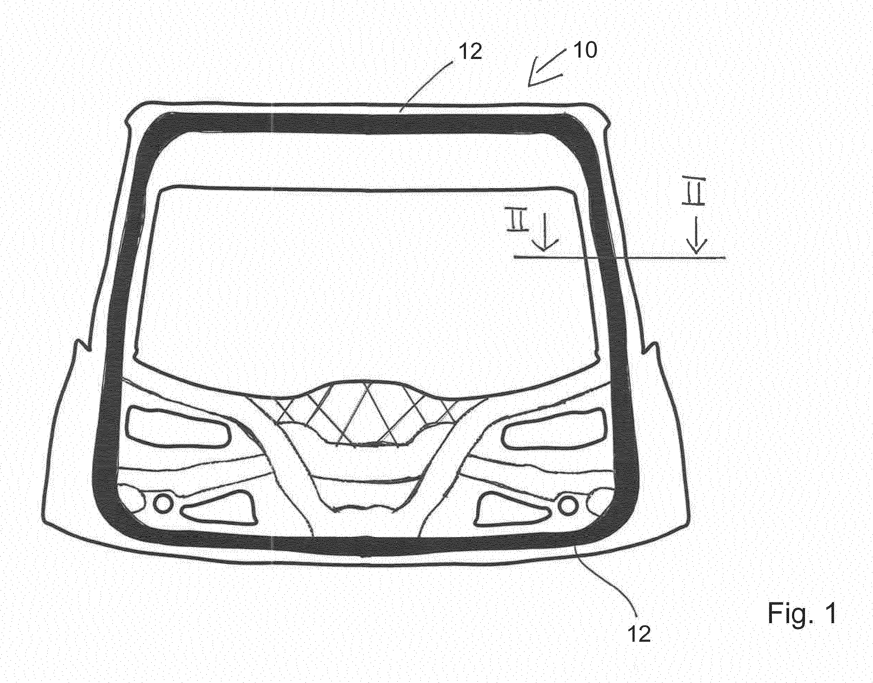

Es werden auf diese Weise die Aspekte Bauteile mit Hohlprofil mit Verstärkungen aus Endlosfasern miteinander verbunden. Somit wird bei den Bauteilen bzw. Komponenten eine maximale Steifigkeit sowie eine hohe Festigkeit erzielt. Die Verbindung der beiden Aspekte kann in mehr als einem Schritt erfolgen. Es wird hierzu auf Figur 1 verwiesen.

Zu beachten ist, dass bei dem vorgestellten Strukturbauteil eine beliebige Variante der Fluidinjektionstechnik (FIT) verwendet werden kann, um ein Hohlprofil bzw. Hohlquerschnitt herzustellen. Beispiele hierfür sind eine Wasserinjektionstechnik und eine Projektilinjektionstechnik.

Alle Polymere bzw. Kunststoffe, die in einem herkömmlichen Kunststoffherstellungsprozess, wie bspw. ein Spritzgießen, ein Formpressen, hergestellt werden, können für E-FIT verwendet werden, einschließlich thermoplastischer Kunststoffe und duroplastischer Kunststoffe, mit oder ohne Verstärkung. Zur Verstärkung können Kurzfasern oder Langfasern verwendet werden.

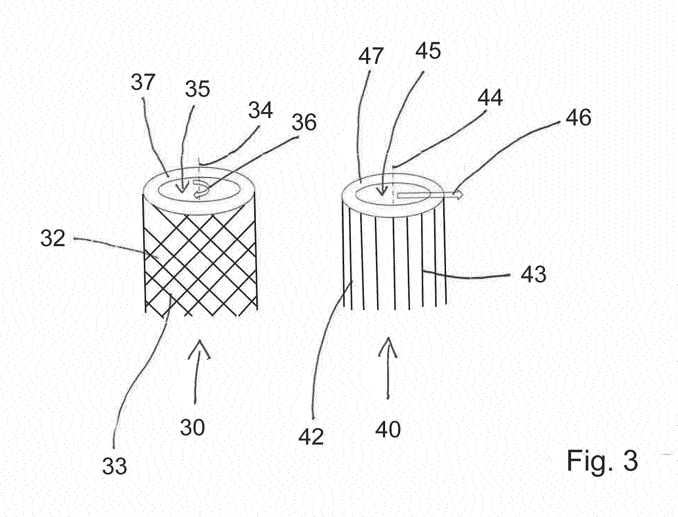

Endlosfasern können Fasern mit oder ohne Matrixmaterial sein. Weiterhin können Fasern unidirektional, geschichtet (layup) oder mehrlagig in der gestalteten Orientierung sein, als Laminat, gewebt oder geflochten usw. sein. Es wird hierzu auf Figur 3 verwiesen.

Es können alle möglichen Werkstoffe für Endlosfasern verwendet werden, einschließlich Glas, Kohlenstoff, synthetische Aramidfaser, naturbelassene Werkstoffe, Basaltfasern usw.

Endlosfasern können während des FIT-Prozesses eingebunden werden. Alternativ können Endlosfasern nach dem FIT-Prozess eingebunden werden, was einen zusätzlichen Schritt erfordert.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung.

### Kurze Beschreibung der Zeichnung

Figur 1 zeigt in einer perspektivischen Darstellung eine Ausführungsform des Strukturbauteils, das zum Einsatz in einem Kraftfahrzeug vorgesehen ist.
Figur 2 zeigt einen Schnitt entlang der Linie II in Figur 1.
Figur 3 zeigt zwei weitere Strukturbauteile.
Figur 4 zeigt ein weiteres Strukturbauteil in zwei Darstellungen.
Figur 5 zeigt ein geöffnetes Werkzeug zur Herstellung eines Strukturbauteils.
Figur 6 zeigt einen Schnitt entlang der Linie VI-VI in Figur 5.
Figur 7 zeigt in einem Flussdiagramm einen möglichen Ablauf des vorgestellten Verfahrens zum Herstellen einer Ausführungsform des Strukturbauteils.
Figur 8 zeigt in einem weiteren Flussdiagramm einen weiteren möglichen Ablauf des vorgestellten Verfahrens zum Herstellen einer weiteren Ausführungsform des Strukturbauteils.

### Ausführungsformen der Erfindung

Die Erfindung ist anhand von Ausführungsformen in der Zeichnung schematisch dargestellt und wird nachfolgend unter Bezugnahme auf die Zeichnung ausführlich beschrieben.

Figur 1 zeigt ein Strukturbauteil 10 eines Kraftfahrzeugs, wobei in dieses Strukturbauteil 10 mehrere Struktursegmente 12 aufgenommen sind. Diese Struktursegmente 12, die aus einem Kunststoff-Werkstoff bestehen, sind mittels eines E-FIT-Verfahrens hergestellt. Dies kann in einem einstufigen Prozess erfolgen.

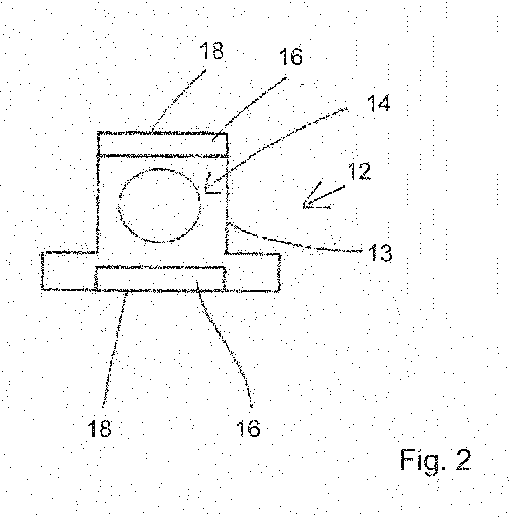

Figur 2 zeigt einen Schnitt entlang der Linie II-II in Figur 1. Zu erkennen ist in einem ersten Abschnitt 13 ein Hohlprofil 14. Am oberen Ende und am unteren Ende des ersten Abschnitts 13 ist jeweils eine Profilierung 16 in zwei zweiten Abschnitten 18 mit Endlosfasern vorgesehen.

Figur 3 zeigt ein erstes Strukturbauteil 30 und ein zweites Strukturbauteil 40. Die beiden Strukturbauteile 30, 40 sind jeweils als Hohlkörper mit ausgeschnittenem Hohlraum 35 bzw. 45 und diesen Hohlraum 35 bzw. 45 umgebende Wandung 37 bzw. 47 aufgebaut und weisen an ihren äußeren Oberflächen bzw. im Bereich ihrer Außenflächen an der Wandung 37 bzw. 47 Bereiche bzw. zweite Abschnitte 32 bzw. 42 auf, die mit Endlosfasern 33 bzw. 43 verstärkt sind.

Der Abschnitt 32 weist dabei Endlosfasern 33 auf, die diagonal, bspw. im 45 ° Winkel, in Bezug auf eine Längsachse 34 des Strukturbauteils 30 und einander überschneidend bzw. überkreuzend ausgerichtet sind. Diese Orientierung eignet sich insbesondere bei einer Torsionsbelastung, wie diese mit Pfeil 36 verdeutlicht ist

Bei dem zweiten Abschnitt 42 hingegen sind die Endlosfasern 43 parallel zur Längsachse 44 des Strukturbauteils 40 ausgerichtet. Dies ist insbesondere für eine Biegebelastung, wie diese mit Pfeil 46 verdeutlicht ist, geeignet.

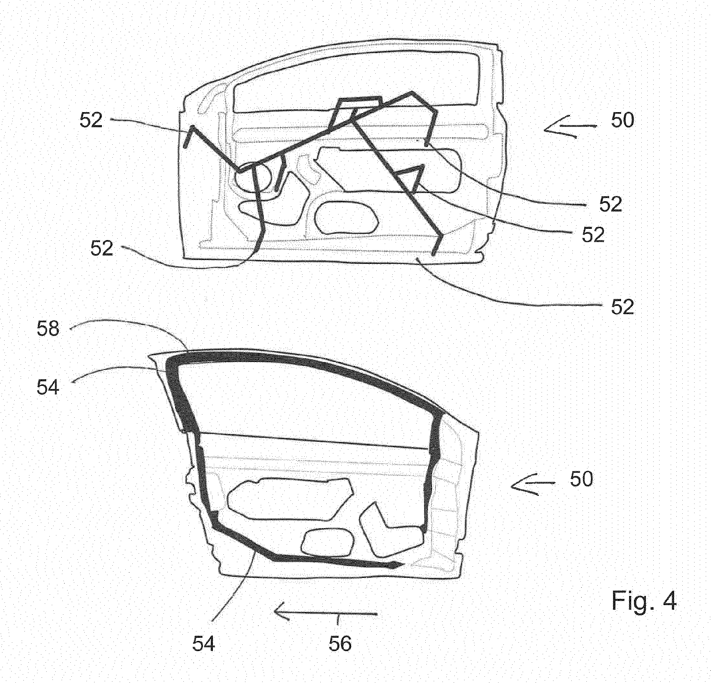

Figur 4 zeigt ein weiteres Strukturbauteil 50, in diesem Fall eine vordere Seitentür, in zwei Darstellungen. Die Darstellung oben verdeutlicht eine Bauteilauslegung mit sechs Anspritzpunkten 52 und einer Kaskade für ein ausgekerntes U-Profil. Die Darstellung zeigt einen kreisförmigen unterbrochenen Kanal 54. Ein Pfeil 56 zeigt die Richtung der Langfaserorientierung.

Die Darstellung verdeutlicht die Kaltkanalanbindung an Flächen des Strukturbauteils 50 und die Teilfüllung über einen Kaltkanal 58. Es erfolgt eine vollständige Füllung über den Kaltkanal 58 in die Flächen.

Das Verfahren zur Herstellung des Strukturbauteils 50 hat, zumindest in einigen Varianten, eine Reihe von Vorteilen:
Erhöhung der Steifigkeit,
Erhöhung des Festigkeitsziels,
Gewichtsreduzierung der Struktur,
Funktionsintegration,
Kostenreduzierung,
vollautomatische Produktion in sehr geringen Zykluszeiten,
kann vollständig recycelt werden,
technologieoffene Entwicklung.

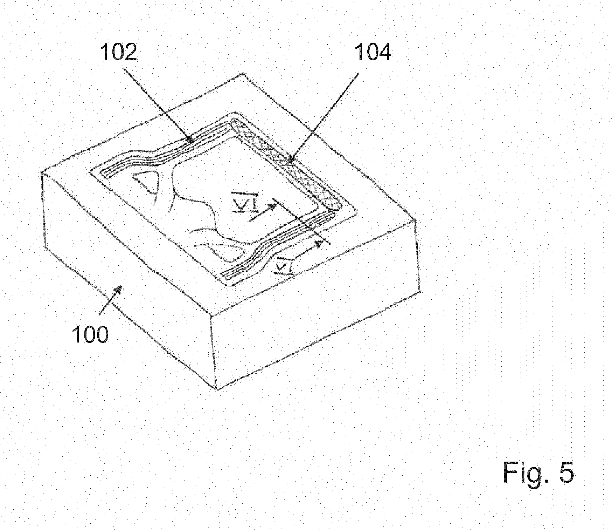

Figur 5 zeigt ein geöffnetes Werkzeug 100 mit einer ersten Endlosfasereinlage 102 und einer zweiten Endlosfasereinlage 104. Nach Schließen des Werkzeugs 100 wird mit Lang- oder Kurzfaser verstärkter Kunststoff eingebracht und das Hohlprofil mittels einer Fluidinjektionstechnik erzeugt.

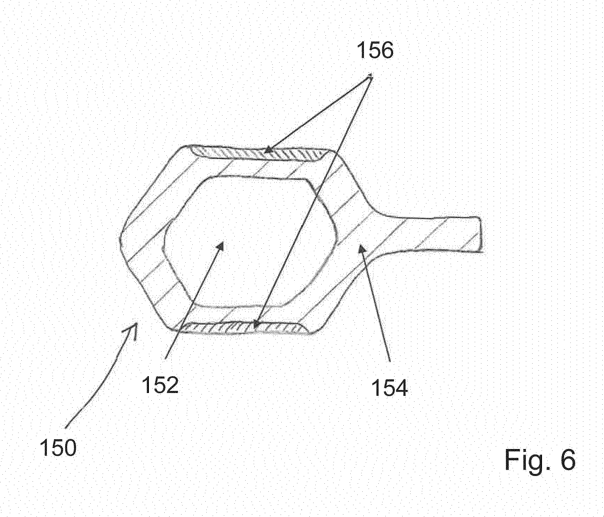

Figur 6 zeigt einen Schnitt entlang der Linie VI-VI in Figur 5. Die Darstellung zeigt ein Strukturbauteil 150 mit einem Hohlprofil 152, einen ersten Abschnitt 154 aus Lang- oder Kurzfaser verstärktem Kunststoff und zwei Endlosfasereinlagen 156, die den zweiten Abschnitt bilden.

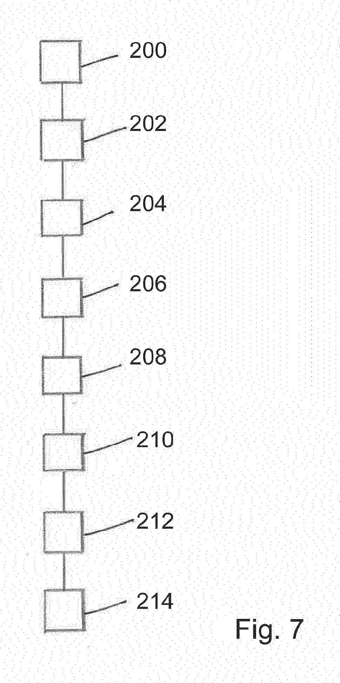

Figur 7 zeigt in einem Flussdiagramm einen möglichen Ablauf zum Herstellen eines Strukturbauteils der hierin beschriebenen Art am Beispiel Spritzguss.

In einem ersten Schritt 200 wird ein Werkzeug geöffnet und ggf. ein Bauteil entnommen falls ein solches vorhanden ist. Dann werden in einem Schritt 202 Endlosfasereinlagen positioniert abgelegt. In einem Schritt 204 wird dann das Werkzeug geschlossen. Es wird dann in einem Schritt 206 ein mit Kurz- oder Langfaser verstärktes Polymer injiziert und eine Kavität im Werkzeug gefüllt. In einem Schritt 208 wird ein Fluid injiziert und das Hohlprofil ausgebildet. Das Werkstück, das spätere Strukturbauteil, kühlt dann in einem Schritt 210 ab. Ist dies erfolgt, wird in einem Schritt 212 das Werkzeug geöffnet und in einem Schritt 214 das Strukturbauteil entnommen.

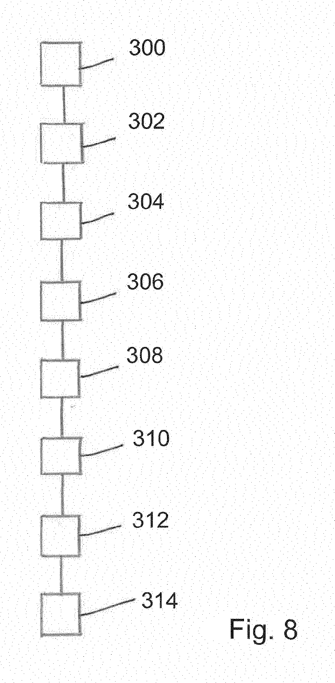

Figur 8 zeigt in einem weiteren Flussdiagramm einen weiteren möglichen Ablauf zum Herstellen eines weiteren Strukturbauteils der hierin beschriebenen Art am Beispiel Fließpressen.

In einem ersten Schritt 300 wird ein Werkzeug geöffnet und ggf. ein Bauteil entnommen falls ein solches vorhanden ist. Dann werden in einem Schritt 302 Endlosfasereinlagen positioniert abgelegt. Es wird dann in einem Schritt 304 ein mit Kurz- oder Langfaser verstärktes Polymer abgelegt. In einem Schritt 306 wird das Werkzeug geschlossen und eine Kavität im Werkzeug gefüllt. In einem Schritt 308 wird ein Fluid injiziert und ein Hohlprofil ausgebildet. Das Werkstück, das spätere Strukturbauteil, kühlt dann in einem Schritt 310 ab. Ist dies erfolgt, wird in einem Schritt 312 das Werkzeug geöffnet und in einem Schritt 314 das Strukturbauteil entnommen.

## Patentansprüche

1. Strukturbauteil, das mittels einer Fluidinjektionstechnik hergestellt ist und mindestens einen ersten Abschnitt (13, 154), in dem ein Hohlprofil (14, 152) vorgesehen ist, und mindestens einen zweiten Abschnitt (18, 32, 42), der mit Endlosfasern (33, 43) verstärkt ist, aufweist.

2. Strukturbauteil nach Anspruch 1, bei dem wenigstens ein erster Abschnitt (13, 154) und wenigstens ein zweiter Abschnitt (18, 32, 42) so zueinander angeordnet sind, dass der wenigstens eine erste Abschnitt (13, 154) zumindest abschnittsweise von dem wenigstens einen zweiten Abschnitt (18, 32, 42) umgeben ist.

3. Strukturbauteil nach Anspruch 1 oder 2, das als Hohlkörper ausgebildet ist, der einen inneren, ausgeschnittenen Hohlraum (35, 45) und eine Wandung (37, 47) mit dem zweiten Abschnitt (18, 32, 42) mit den Endlosfasern (33, 43) aufweist.

4. Strukturbauteil nach einem der Ansprüche 1 bis 3, bei dem das Hohlprofil (14, 152) durch ein mit Wasser angetriebenes Projektil erzeugt ist.

5. Strukturbauteil nach einem der Ansprüche 1 bis 3, bei dem Endlosfasern (33, 43) parallel zu einer Längsachse (34, 44) des Hohlprofils (14, 152) verlaufen.

6. Strukturbauteil nach einem der Ansprüche 1 bis 5, bei dem Endlosfasern (33, 43) diagonal zu einer Längsachse (34, 44) des Hohlprofils (14, 152) verlaufen.

7. Strukturbauteil nach einem der Ansprüche 1 bis 6, bei dem Endlosfasern (33, 43) tangential zu dem Hohlprofil (14, 152) verlaufen.

8. Strukturbauteil nach einem der Ansprüche 1 bis 7, bei dem als Fluidinjektionstechnik eine Technik aus einer Gruppe ausgewählt ist, die besteht aus: Wasserinjektionstechnik, Projektilinjektionstechnik, Gasinjektionstechnik.

9. Strukturbauteil nach einem der Ansprüche 1 bis 8, bei dem ein thermoplastischer oder duroplastischer Kunststoff mit oder ohne Verstärkung verwendet ist.

10. Strukturbauteil nach einem der Ansprüche 1 bis 9, bei dem Endlosfasern (33, 43) mit oder ohne Matrixmaterial verwendet sind.

11. Strukturbauteil nach einem der Ansprüche 1 bis 10, bei dem der Werkstoff für die Endlosfasern (33, 43) ausgewählt ist aus einer Gruppe, die besteht aus: Glas, Kohlenstoff, synthetischer Aramidfaser, Basaltfasern, naturbelassenem Werkstoff.

12. Strukturbauteil nach einem der Ansprüche 1 bis 11, bei dem die Endlosfasern (33, 43) in dem Fluidinjektionsschritt eingebunden sind.

13. Strukturbauteil nach einem der Ansprüche 1 bis 11, bei dem die Endlosfasern (33, 43) in einem Schritt nach dem Fluidinjektionsschritt eingebunden sind.
